# EUROPÄISCHE PATENTANMELDUNG

(11) **EP 4 512 769 A1**
(43) Veröffentlichungstag der Anmeldung: **26.02.2025**
(21) Anmeldenummer: 24192777.1
(22) Anmeldetag: 05.08.2024
(51) Int. Cl.: C01B 3/00, B01D 3/00, C07C 7/04, C25B 1/26

(54) **ANLAGE UND VERFAHREN ZUR HERSTELLUNG UND VERWENDUNG EINES FLÜSSIGEN ORGANISCHEN WASSERSTOFFTRÄGERMEDIUMS**

(30) Priorität: 18.08.2023 DE 102023207952
(71) Anmelder: HYDROGENIOUS LOHC TECHNOLOGIES GMBH, 91058 Erlangen (DE)
(72) Erfinder: Margutti, João Miguel, 80801 München (DE); Obermeier, Jonas, 91052 Erlangen (DE); Weiß, Alexander, 91096 Möhrendorf (DE); Kohles, Michael, 96052 Bamberg (DE); Hummel, Christin, 91315 Höchstadt a. d. Aisch (DE)
(74) Vertreter: Rau, Schneck & Hübner Patentanwälte Rechtsanwälte PartGmbB

(57) **Zusammenfassung**

Eine Anlage zur Herstellung und Verwendung eines flüssigen organischen Wasserstoffträgermediums (LOHC) umfasst eine Herstell-Einrichtung (2) zur Herstellung von LOHC sowie einen mit der Herstell-Einrichtung (2) gekoppelten LOHC-Reaktor (3) zum Speichern und/oder Freisetzen von Wasserstoff mittels des LOHC.

## Beschreibung

Der Inhalt der deutschen Patentanmeldung DE 10 2023 207 952.6 wird durch Bezugnahme hierin aufgenommen.

Die Erfindung betrifft eine Anlage und ein Verfahren zur Herstellung und Verwendung eines flüssigen organischen Wasserstoffträgermediums, insbesondere Benzyltoluol.

Es ist bekannt, dass sich Benzyltoluol eignet, Wasserstoff durch eine katalytische Hydrierreaktion zu speichern. Dabei wird Benzyltoluol, kurz BT, zu Perhydrobenzyltoluol, kurz PBT, hydriert. In einer katalytischen Dehydrierreaktion kann Wasserstoff von PBT wieder freigesetzt und in BT überführt werden. Die beiden Reaktionen sind insbesondere reversibel. BT und PBT sind Kohlenwasserstoffverbindungen, die bei Raumtemperatur flüssig sind. BT und PBT bilden ein Wasserstoffträgersystem in Form von flüssigen organischen Verbindungspaaren, die als LOHC-(Liquid Organic Hydrogen Carrier)System bekannt sind. Mit der zunehmenden Bedeutung von Wasserstoff als Energieträger wird der Bedarf an LOHC-Systemen steigen.

Die Herstellung von BT ist energieaufwändig und erfordert Erdöl als fossilen Rohstoff. Bei der BT-Herstellung werden CO₂-Emissionen verursacht. Zudem weisen heute hergestellte LOHC-Systeme Verunreinigungen und/oder Nebenprodukte auf, die bei der Herstellung und/oder Verwendung der LOHC-Systeme entstehen können. Beispielsweise werden bei der BT-Herstellung Benzylchlorid und/oder schwefelhaltige Kohlenwasserstoffe gebildet oder verwendet, die als Verunreinigungen in einem LOHC-System auftreten können. Methylfluoren und/oder Dibenzyltoluol werden sowohl als Verunreinigung bei der BT-Herstellung als auch Nebenprodukte bei der Verwendung von BT gebildet. Anthracen und andere polyzyklische Aromaten entstehen vor allem als Nebenprodukte bei der Verwendung von BT. Nebenprodukte und/oder Verunreinigungen können als Katalysatorgifte wirken und die Aktivität des Katalysatormaterials für die Hydrierung und Dehydrierung des Wasserstoffträgermediums reduzieren. Außerdem verändem diese Nebenprodukte und/oder Verunreinigungen die Stoffeigenschaften des Wasserstoffträgermediums.

Der Erfindung liegt die Aufgabe zugrunde, die Herstellung und Verwendung eines flüssigen organischen Wasserstoffträgermediums, insbesondere Benzyltoluol, zu verbessern, insbesondere die Herstellung zu vereinfachen und den Energieaufwand dafür zu minimieren und die Qualität des hergestellten Benzyltoluols zu verbessern, also die Reinheit zu erhöhen, indem Verunreinigungen und/oder Nebenprodukte reduziert werden.

Diese Aufgabe ist erfindungsgemäß gelöst durch eine Anlage mit den Merkmalen des Anspruchs 1 sowie durch ein Verfahren mit den Merkmalen des Anspruchs 6.

Der Kern der Erfindung besteht darin, dass die Herstellung eines flüssigen organischen Wasserstoffträgermediums (LOHC), insbesondere Benzyltoluol, mit der Verwendung als Wasserstoffträgermedium gekoppelt wird. Als LOHC kann beispielsweise auch Benzol, Toluol, Xylol und/oder Ethylbenzol dienen. Eine Herstell-Einrichtung, die zur Herstellung von LOHC, insbesondere Benzyltoluol, dient, ist in einer erfindungsgemäßen Anlage mit einem LOHC-Reaktor gekoppelt, der zum Speichern und/oder zum Freisetzen von Wasserstoff mittels des LOHC, insbesondere Benzyltoluols dient. Das LOHC umfasst insbesondere kohlenwasserstoffhaltige und/oder aromatische Verbindungen.

Die LOHC-Herstellung, insbesondere die LOHC-Synthese und insbesondere die BT-Synthese, findet an einem Ort statt, an dem die Wasserstoffspeicherung oder Wasserstofffreisetzung mittels LOHC, insbesondere BT, stattfindet. Insbesondere ist die Herstell-Einrichtung in die Anlage integriert. Dadurch, dass die Herstellung dort erfolgt, wo das Wasserstoffträgermedium genutzt wird, ergeben sich Synergieeffekte. Die Herstell-Einrichtung ist insbesondere unmittelbar mit dem Reaktor gekoppelt, so dass Stoffströme und/oder Energieströme zwischen der Herstell-Einrichtung und dem gekoppelten Reaktor unmittelbar ausgetauscht werden können. Insbesondere weist die Herstell-Einrichtung Aggregate und Komponenten auf, die zur Behandlung von Produkten aus dem Reaktor genutzt werden können.

Für die LOHC-Herstellung, also die Herstellung eines LOHC-Produkts, kann als Ausgangsstoff, also als LOHC-Edukt, ein anderes LOHC-Material dienen, insbesondere Toluol. Wesentlich ist, dass sich das LOHC-Edukt von dem LOHC-Produkt unterscheidet. Der Unterschied ergibt sich nicht allein aus der Anzahl der Wasserstoffatome zwischen LOHC-Edukt und LOHC-Produkt, sondern insbesondre aufgrund der Anzahl und/oder Anordnung der Kohlenstoffatome. Insbesondere beruht die LOHC-Herstellung auf einer Synthese von Edukten, wobei mindestens ein Edukt LOHC sein kann.

Die Hydrierung und/oder Dehydrierung von LOHC sind keine LOHC-Herstellungsverfahren im Sinne der Erfindung.

Insbesondere wurde erkannt, dass eine unabhängigere Versorgung mit LOHC, insbesondere BT, möglich ist, wenn das Wasserstoffträgermedium eigenständig hergestellt werden kann. Eine Abhängigkeit von externen Lieferanten ist reduziert und entfällt insbesondere. Erfindungsgemäß ist eine höhere, insbesondere vollständige, Autarkie hinsichtlich der LOHC-Bereitstellung möglich.

Es wurde insbesondere erkannt, dass lange Transportwege vom Ort der LOHC-Herstellung, insbesondere der BT-Herstellung, zum Ort der Nutzung als Wasserstoffträgermedium entfallen können. Der Gesamtenergieaufwand für die Bereitstellung des Wasserstoffträgermediums ist reduziert. Insbesondere entfallen Transportkosten. Die Schadstoffemissionen für den Transport in Form von Transportfahrzeugen sind reduziert und insbesondere verhindert.

Mit der Herstell-Einrichtung wird insbesondere eine Mischung aus verschiedenen BT-Isomeren erzeugt, insbesondere eine Mischung aus ortho-BT, meta-BT und/oder para-BT. Es hat sich insbesondere gezeigt, dass hinsichtlich Reduzierung von Verunreinigungen und/oder Nebenprodukten es vorteilhaft ist, wenn isomerenreines BT verwendet wird oder die Mischung zumindest mit einem BT-Isomer angereichert ist, also hauptsächlich eines der Isomere aufweist.

Mit der erfindungsgemäßen Anlage und dem erfindungsgemäßen Verfahren gelingt es insbesondere die Abwärme der Reaktionen aus dem LOHC-Kreislaufprozess effizient zu nutzen, um damit operative Energiekosten und den CO₂-Fußabdruck bei der LOHC-Herstellung, insbesondere der BT-Herstellung zu reduzieren.

Erfindungsgemäß ist es also möglich, das für den gekoppelten LOHC-Reaktor erforderliche LOHC, insbesondere BT, größtenteils, also insbesondere zu mindestens 80%, insbesondere zu mindestens 90%, insbesondere zu mindestens 95% und insbesondere vollständig, mittels der Herstell-Einrichtung 2 herzustellen. Dadurch ist ein weitgehend autarker und insbesondere vollständig autarker Betrieb bei der Verwendung von LOHC, insbesondere Benzyltoluol als Wasserstoffträgermedium gewährleistet.

Ein Verfahren, bei dem die Herstell-Einrichtung eine Synthese-Einrichtung ist, mit der insbesondere eine Chlorierung von Toluol durchgeführt wird, ermöglicht eine unkomplizierte BT-Herstellung durch Synthese. Die BT-Synthese ist ein an sich bekanntes Verfahren, das technisch ausgereift und beherrschbar ist. Es ist dadurch möglich, einen an sich ausgereiften und kontrollierten Prozess in die LOHC-Prozesskette einzubinden und zu integrieren.

Ein Verfahren, bei dem zur Bereitstellung von Chlor für die Synthese-Einrichtung eine Chloralkali-Elektrolyse durchgeführt wird, ermöglicht die Verwendung von Wasserstoffgas als Nebenprodukt aus der Chloralkali-Elektrolyse für die Hydrierung des BT in dem Hydrierreaktor.

Es existieren alternative Verfahren, die eine besonders umweltfreundliche Bereitstellung von Toluol als Rohstoff für die Herstell-Einrichtung ermöglichen. Gegenüber dem Stand der Technik, in dem Toluol durch einen Raffinerieprozesse aus Erdöl als fossilem Rohstoff gewonnen wird, kann der Einsatz fossiler Energieträger dadurch reduziert werden.

Toluol kann beispielsweise enzymatisch aus einer durch ein Enzym oder Enzymsystem, insbesondere durch Decarboxylierung von Phenylacetat mit mindestens einem Enzym der Familie der Glycylradikal-Enzyme (GRE), insbesondere einer Phenylacetatdecarboxylase (PhdB) und dem zugehörigen Phenylacetatdecarboxylase aktivierenden Enzym (PhdA) hergestellt werden. Durch diese enzymatische Toluol-Synthese können verschiedene regenerative Kohlenstoffquellen genutzt werden, aus welchen sich Phenylessigsäure herstellen lässt, welche nichtfossilen Ursprungs ist, insbesondere Glucose aus zellulosehaltiger Masse. Die Toluol-Synthese kann mit isolierten Enzymen in vitro oder mit den Mikroorganismen selbst in vivo erfolgen. Insbesondere Mikroorganismen der Familie Acidobakterien, insbesondere des Stammes Tolsyn, sind hierfür geeignet. Ebenfalls denkbar ist die Herstellung der Enzyme durch Protein-Engineering. Darüber hinaus ist eine weitere Umsetzung zu BT mittels weiterer Enzyme bzw. Mikroorganismen denkbar, insbesondere gentechnisch modifizierter Mikroorganismen. Ebenfalls ist eine direkte Synthese aus Biomasse zu BT mit gentechnisch modifizierten Mikroorganismen denkbar.

Alternativ kann Lignin aufgrund seiner aromatischen Grundstruktur als Ausgangsprodukt für die direkte Herstellung von Chemikalien auf Aromatenbasis dienen. Lignin gehört wie Zellulose und Hemiezellulose zu den Biopolymerklassen, aus welchen Biomasse hauptsächlich besteht. Vor allem Lignocellulose-Biomasse aus landwirtschaftlichen Abfällen, Waldabfällen, Abfällen aus der Papierindustrie, ist aufgrund des vergleichsweise hohen Lignin-Gehaltes ein potentiell geeigneter Ausgangsstoff. Aus dem somit aus nachwachsenden Rohstoffen gewonnenen Toluol kann anschließend BT hergestellt werden. Denkbar ist auch, auf Basis von Lignin in einem Zwischenschritt katalytisch Phenazin herzustellen.

Gemäß einer weiteren Alternative kann Biogas verwendet werden, das durch die Vergärung biogener Materialein wie Bioabfälle sowie pflanzlicher und/oder tierischer Reststoffe gewonnen werden kann. Hauptsächlich besteht Biogas aus Methan (CH₄) und Kohlenstoffdioxid (CO₂) und weist zudem geringere Mengen an Stickstoff (N₂), Sauerstoff (O₂), Schwefelwasserstoff (H₂S), Wasserstoff (H₂) und Ammoniak (NH₃) auf. Das im Biogas enthaltene Kohlenmonoxid (CO) und Wasserstoffgas (H₂) kann als Synthesegas fungieren, um beispielsweise mittels katalytischer Synthese BT herzustellen. Bei dieser Variante wäre Toluol als Ausgangsprodukt für die BT-Herstellung nicht erforderlich. Alternativ ist es aber möglich, aus dem Biogas Toluol als Zwischenprodukt herzustellen, das anschließend für die BT-Synthese verwendet werden kann. Es ist auch denkbar, aus dem Synthesegas zunächst Methanol, dann Polyol und daraus BT herzustellen. Des Weiteren kann das Synthesegas aus dem im Biogas enthaltene Methan mittels partieller katalytischer Oxidation zu Kohlenstoffmonoxid und mittels Umsetzung von Methan mit Kohlenstoffdioxid gewonnen werden. Ebenso kann im Fall einer Mischgashydrierung, insbesondere einer Hydrierung mit Biogas, von BT das nicht umgesetzte Gas wiederum der Synthesegasproduktion und damit der BT-Herstellung zur Verfügung gestellt werden.

Die Herstellung, insbesondere die Synthese von DBT erfolgt analog zu der BT-Synthese.

Die Herstellung von Benzol, Toluol, Xylol und/oder Ethylbenzol erfolgt insbesondere durch katalytisches Reformen von Naphtha. In einem so erzeugten Reformat/Produktstrom liegt eine breite Mischung der vorstehend genannten aromatischen Verbindungen vor, wobei auch nicht-aromatische Verbindungen enthalten sein können. Der aromatische Anteil wird mittels Flüssig-Flüssig-Extraktion isoliert, insbesondere durch einen sogenannten Sulfolan-Prozess. Anschließend kann eine Fraktionierung erfolgen, insbesondere durch Rektifikation. Die Rektifikation ist ein thermisches Trennverfahren mit einem Wärmebedarf, der insbesondere durch Wärme des LOHC-Reaktors gedeckt werden kann.

Eine Anlage gemäß Anspruch 2 ermöglicht eine vorteilhafte Wärmeintegration. Es wurde insbesondere erkannt, dass bei der LOHC-Herstellung, insbesondere der BT-Herstellung in der Herstell-Einrichtung ein Energie- und/oder Wärme-Bedarf besteht, so dass externe Wärme und/oder Energie zugeführt und damit ein zusätzlicher Wärme- und Energieaufwand betrieben werden muss. Außerdem wurde erkannt, dass vor allem bei der Hydrierung von LOHC, insbesondere von BT zu PBT, ein Wärmeüberschuss besteht, der einen enormen Kühlaufwand bedeutet, um die Abwärme zuverlässig abzuführen. Überraschend wurde gefunden, dass der Energie- und Wärmebedarf in der Herstell-Einrichtung vorteilhaft durch den Energieüberschuss in Form der Abwärme aus dem LOHC-Reaktor zu Speichern und/oder Freisetzen von Wasserstoff genutzt werden kann. Eine separate Kühlung des LOHC-Reaktors kann reduziert werden oder entfällt insbesondere.

Als weitere Wärmequelle kann insbesondere auch eine exotherme Oxidation von BT zu Methylbenzophenon dienen. Eine Anlage und ein Verfahren von LOHC-Oxidationsprozessen sind in DE 10 2021 203 884 A1 oder in DE 10 2021 203 883 A1 offenbart, worauf hiermit ausdrücklich verwiesen wird.

Bei der Anlage ist die Herstell-Einrichtung also insbesondere unmittelbar mit dem LOHC-Reaktor, insbesondere einem Hydrierreaktor und/oder mit einem Oxidationsreaktor, mittels eines Wärmeübertragers gekoppelt. Der Wärmeübertrager dient zur Übertragung der Wärme von dem LOHC-Reaktor zu der Herstell-Einrichtung. In einer unkomplizierten Ausführung kann der Wärmeübertrager als Fluidleitung ausgeführt sein, um einen warmen Stoffstrom, insbesondere hydriertes LOHC, insbesondere PBT, von dem LOHC-Reaktor zur der Herstell-Einrichtung zu führen. Der warme Stoffstrom des hydrierten LOHC kann die Wärme dann unmittelbar in der Herstell-Einrichtung abgeben. Zusätzlich oder alternativ kann der Wärmeübertrager mit einem Wärmeträgermedium ausgeführt sein, das den Wärmetransport von LOHC-Reaktor in die Herstell-Einrichtung ermöglicht.

Der Wärmeübertrager ist insbesondere als Wärmerohr ausgeführt, das im englischen Sprachgebrauch auch als heat pipe bezeichnet wird.

Eine Anlage gemäß Anspruch 3 ermöglicht eine besonders vorteilhafte Wärmeintegration und weist energetische Vorteile auf.

Eine Anlage gemäß Anspruch 4 ermöglicht eine zuverlässige Aufreinigung des LOHC, insbesondere des BT in der Herstell-Einrichtung. Eine Trennvorrichtung der Herstell-Einrichtung ist insbesondere als thermische Trennvorrichtung ausgeführt und insbesondere in Form einer Vakuumkolonne. Dadurch ist es möglich, von dem hergestellten BT insbesondere destillativ Dibenzyltoluol, kurz DBT, abzutrennen. Es ist dadurch möglich, reines BT gemäß festgelegten Produktspezifikationen herzustellen, insbesondere einen festlegbaren Höchstwert eines DBT-Anteils einzuhalten.

Als besonders vorteilhaft hat es sich erwiesen, dass die Trennvorrichtung der Herstell-Einrichtung fluidtechnisch mit dem LOHC-Reaktor verbunden ist, so dass Reaktorprodukte, insbesondere ein Gemisch, das LOHC, insbesondere BT, und andere Verunreinigungen und/oder Nebenprodukte aufweist, der Trennvorrichtung zugeführt und dort getrennt werden kann. Dadurch ist eine zusätzliche Nutzung der Trennvorrichtung möglich, so dass eine separate Trennvorrichtung in der Gesamtanlage insbesondere entbehrlich ist und/oder eine separate Trennvorrichtung auf einen Trennvorgang ausgerichtet und konzipiert werden kann. Diese zusätzliche Trennvorrichtung ist insbesondere unkompliziert und kosteneffizient aufgebaut und ausgeführt. Der Anlagenaufwand und damit der Investitionsbedarf sind reduziert. Eine derartige Anlage ist ökonomisch effizient.

Dadurch, dass bereits bei der LOHC-, insbesondere BT-Herstellung der Anteil an Verunreinigungen und/oder Nebenprodukten reduziert wird, ist die Standzeit des Wasserstoffträgermediums erhöht. Es wurde insbesondere erkannt, dass Verunreinigungen und/oder Nebenprodukte zur erhöhten Bildung von Verunreinigungen und/oder Nebenprodukten in Nachfolgeprozessen und/oder zu einem Verlust der Selektivität und/oder Produktivität des LOHC in Nachfolgeprozessen aufgrund der Verunreinigungen und/oder Nebenprodukten führen können. Dieses Risiko ist damit vermieden. Der integrale Reinigungsaufwand ist reduziert.

Dadurch, dass das Wasserstoffträgermedium aus dem Reaktor in der Trennvorrichtung aufgetrennt werden kann, können Nebenprodukte und/oder Verunreinigungen zuverlässig abgetrennt werden. Das aufgereinigte Wasserstoffträgermedium kann länger genutzt werden. LOHC, das im Gesamtprozess, insbesondere bei der Herstellung und/oder der Verwendung in dem LOHC-Reaktor verloren gegangen und/oder degradiert worden ist, kann durch neu hergestelltes oder wieder aufbereitetes LOHC ersetzt werden. Der Gesamtenergieaufwand und/oder CO₂-Emissionen für die Bereitstellung von Wasserstoffträgermedium sind reduziert.

Eine Anlage gemäß Anspruch 5 ermöglicht eine zusätzliche Effizienzsteigerung, insbesondere hinsichtlich der vorliegenden Stoffströme. Es wurde erkannt, dass das für die Chlorierung von Toluol erforderliche Chlor mittels einer Elektrolysevorrichtung durch Chloralkali-Elektrolyse bereitgestellt werden kann. Bei der Chloralkali-Elektrolyse wird Wasserstoffgas als Nebenprodukt freigesetzt, das in dem LOHC-Reaktor zur Hydrierung des LOHC, insbesondere BT, genutzt werden kann. Der Gesamtaufwand für die Wasserstoffbereitstellung ist dadurch reduziert. Die Elektrolysevorrichtung ist insbesondere fluidtechnisch mit dem LOHC-Reaktor verbunden. Insbesondere ist die Elektrolysevorrichtung in der Herstell-Einrichtung integriert. Darüber hinaus wurde erkannt, dass die Elektrolysevorrichtung mit thermischer und/oder elektrischer Energie der Herstell-Einrichtung, insbesondere deren Abwärme direkt und/oder mittels einer Dampfturbine, und/oder des LOHC-Reaktors, insbesondere dessen Abwärme, gespeist werden kann, um den Gesamtwirkungsgrad der Anlage zu erhöhen.

Das Verfahren gemäß Anspruch 6 weist im Wesentlichen die Vorteile der Anlage gemäß Anspruch 1 auf, worauf hiermit verwiesen wird.

Ein Verfahren gemäß Anspruch 7 ermöglicht eine vorteilhafte Wärmeintegration entsprechend Anspruch 2.

Ein Verfahren gemäß Anspruch 8 ermöglicht die Herstellung von BT in der Herstell-Einrichtung mit erhöhter Reinheit.

Ein Verfahren gemäß Anspruch 9 ermöglicht die effiziente Nutzung der Trennvorrichtung für Reaktorprodukte.

Ein Verfahren gemäß Anspruch 10 ermöglicht eine gezielte Aufreinigung des LOHC in der Herstell-Einrichtung. Es wurde gefunden, dass die Aufreinigung besonders effizient mit dem Stoffstrom aus dem LOHC-Reaktor, insbesondere mit bereits gebrauchtem LOHC, insbesondere mit gebrauchtem Benzyltoluol erfolgen kann. Insbesondere wird das gebrauchte LOHC gezielt einem von mehreren Kolonnenböden einer Destillationskolonne zugeleitet. Die gezielte Zuleitung erfolgt insbesondere auf Basis von physikalischen und/oder chemischen Eigenschaften des gebrauchten LOHC, insbesondere dessen Hydriergrad und/oder dessen Nebenproduktgehalts. Es ist insbesondere für eine automatisierte Durchführung des Verfahrens vorteilhaft wenn der Hydriergrad und/oder der Anteil von Nebenprodukten in dem gebrauchten LOHC mittels einer Messeinheit oder Analyseeinheit erfasst wird. Insbesondere ist es vorteilhaft, das gebrauchte LOHC in Abhängigkeit der physikalischen und/oder chemischen Eigenschaften zu fraktionieren, bevor es verschiedenen Kolonnenböden zugeleitet werden soll. Für die Fraktionierung können verschiedene Trenntechniken verwendet werden, insbesondere basierend auf der Dichte mittels einer Zentrifuge und/oder mittels der Molekulargröße mittels einer Membran als Molekularsieb.

Denkbar ist es auch, die Trennung des gebrauchten LOHC vorrangig hinsichtlich von schwersiedenden Anteilen durchzuführen, also schwersiedende Verbindungen aus dem LOHC-Reaktor erzeugten Stoffstrom abzutrennen. Diese Schwersieder-Fraktion könnte direkt einem Sumpfprodukt der Destillationskolonne zugeführt und damit vermischt werden. Es wurde insbesondere erkannt, dass es nicht erforderlich ist, die Schwersieder-Fraktion der Destillationskolonne zuzuführen. Mit dem so erzeugten Schwersieder-Bypass ergibt sich eine Energieeinsparung bei Betrieb der Destillationskolonne.

Ein Verfahren gemäß Anspruch 11 vereinfacht die automatisierte und insbesondere vollautomatische Durchführung des Verfahrens, insbesondere der fraktionierten Zuführung von gebrauchtem LOHC zu der Trennvorrichtung. Die aufwändige und kostenintensive Herstell-Einrichtung erhält durch die Aufreinigung des bereits prozessierten BT einen zusätzlichen Nutzen und wird dadurch insgesamt wirtschaftlich attraktiver. Durch die Einspeisung des bereits prozessierten LOHC, also des gebrauchten LOHC, insbesondere BT, am geeigneten Kolonnenboden der Herstell-Einrichtung kann operativ eine Kolonne eingespart werden.

Die Herstellung von CO₂-neutralem oder CO₂-reduziertem LOHC, insbesondere BT, ermöglicht die Verringerung des sogenannten CO₂-Fußabdrucks für den LOHC-Prozess insgesamt. Die CO₂-reduzierte Herstellung gelingt durch Nutzung und/oder Kopplung von Abwärme, insbesondere aus der LOHC-Hydrierung, mit der LOHC-Herstellung. Der Einsatz von regenerativen Ausgangsstoffen ermöglicht die CO₂-neutrale Herstellung von LOHC, sogenanntes grünes LOHC.

Es wurde insbesondere erkannt, dass eine Rückführung von kontaminiertem LOHC, das für die Verwendung in einem LOHC-Prozess, also für die Hydrierung und/oder Dehydrierung, nicht mehr verwendet werden kann, in dem LOHC-Herstellungsprozess den Rohstoffbedarf für die LOHC-Herstellung reduziert. Zusätzlich oder alternativ kann kontaminiertes LOHC als Kohlenwasserstoff-Vorprodukt in chemischen Raffinerieprozessen genutzt werden, insbesondere als Beimischung zu Naphta-Produkten.

Es wurde insbesondere auch erkannt, dass durch die Reduzierung des Anteils an Verunreinigungen im LOHC der CO₂-Fußabdruck verbessert werden kann. Insbesondere beträgt der Anteil der Verunreinigungen im LOHC höchstens 10 wt-%, insbesondere höchstens 5 wt-%, insbesondere höchstens 2 wt-% und insbesondere höchstens 0,1 wt-%. Als Verunreinigungen werden insbesondere polyaromatische Kohlenwasserstoffverbindungen verstanden, die einen negativen Einfluss auf die LOHC-Kreislaufprozesse haben, wie beispielsweise die Reduzierung einer maximalen Wasserstoffspeichermenge, wodurch weniger Wasserstoff pro LOHC transportiert werden kann und der CO₂-Fußabdruck pro transportierter LOHC-Menge steigt. Zudem wurde erkannt, dass Verunreinigungen eine Veränderung der physikochemischen Eigenschaften eines LOHC-Gemischs und/oder die Deaktivierung der verwendeten Katalysatoren bewirken kann.

Insbesondere wurde erkannt, dass kontaminiertes LOHC in anderen chemischen Prozessen verwendet werden kann, bei welchen die Reinheitsanforderungen typischerweise geringer sind. Beispielsweise können BT und/oder PBT für Wärmeträger-Anwendungen, die dem originären Anwendungszweck dieser Verbindungen entsprechen, genutzt werden. Dadurch ist der CO₂-Fußabdruck des LOHC-Kreislaufs wegen der Weiternutzung der kontaminierten Verbindungen reduziert bzw. können CO₂-Emissionen, die sich durch die Entsorgung der Verbindungen ergeben würden, vermieden werden. Zusätzlich oder alternativ kann degradiertes LOHC verbrannt, also thermisch genutzt, werden und die Wärme insbesondere für die Herstell-Einrichtung und/oder für andere industrielle Prozesse zur Verfügung gestellt werden, sodass die CO₂-Emissionen betreffend die LOHC-Entsorgung aufgrund der Wärmekopplung reduziert sind.

Bei einer nicht-zyklischen LOHC-Wirtschaft, bei der LOHC nach der Dehydrierung nicht im Sinne eines Kreislaufs zurückgeführt und wieder hydriert, sondern gezielt in anderen chemischen Prozessen eingeführt wird, ermöglicht eine weitere Reduzierung von CO₂-Emissionen. Wasserstoff kann in diesem Fall als Nebenprodukt verwendet werden. Das entladene LOHC kann als Produkt in anderen chemischen Prozessen Anwendung finden. Da Wasserstoff als Nebenprodukt anfällt, werden CO₂-Emissionen bezüglich der Herstellung und des Transports des beladenen LOHC anteilig angerechnet und insbesondere für einen Folgeprozess berücksichtigt. Diesbezüglich eignet sich beispielsweise Toluol, das nach der Dehydrierung von Methylcyclohexan entsteht. Toluol kann in verschiedenen chemischen Prozessen genutzt werden. Dieses Prinzip kann auch für Wärmeträgeranwendungen oder die Elektrizitätsflüssigkeiten angewendet werden hinsichtlich Benzyltoluol und/oder Dibenzyltoluol.

In dieser Kolonne sind auch höhersiedende und niedersiedende Nebenprodukte der BT-Synthese vorhanden. Dadurch kann die herausfordernde Trennaufgabe, nur geringe Verunreinigungen aus einer verhältnismäßig großen Masse an prozessierten BT zu entfernen, mit der ohnehin vorhandenen Trennvorrichtung der Herstell-Einrichtung durchgeführt werden. Außerdem wurde erkannt, dass bei der BT-Synthese eine vergleichsweise große Menge an schwersiedenden Nebenprodukten von insbesondere mindestens 10 wt-%, insbesondere mindestens 12 wt-%, insbesondere mindestens 15 wt-% und insbesondere mindestens 30 wt-%, bei der BT-Synthese gebildet werden. In bekannten LOHC-Prozessen liegt der Anteil schwersiedender Nebenprodukte unter 5 wt-%, insbesondere bei höchstens 3 wt-%, insbesondere bei höchstens 1 wt-%, insbesondere bei höchstens 0,5 wt-% und insbesondere bei höchstens 0,1 wt-%. Damit ist es möglich, den vergleichsweise geringen Anteil an schwersiedenden Nebenprodukten aus den LOHC-Prozessen mit der deutlich größeren Fraktion aus der BT-Synthese unmittelbar als Syntheseprodukt zusammenzuführen durch die gezielte Einspeisung in den dafür vorgesehenen Kolonnenboden.

Vor allem die höhersiedende Produktfraktion kann an eine Cracking-Stufe zurückgeführt werden, um zusätzliches Toluol herzustellen. Die Toluol-Ausbeute ist damit insgesamt erhöht. Letztlich ermöglichen die erfindungsgemäße Anlage und das erfindungsgemäße Verfahren geringere Abhängigkeiten zu externen Lieferanten, wenn BT eigenständig und unabhängig synthetisiert wird.

Sowohl die in den Patentansprüchen angegebenen Merkmale als auch die in dem Ausführungsbeispiel einer erfindungsgemäßen Anlage angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Wesentliche Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Darstellung einer erfindungsgemäßen Anlage mit einer Synthese-Einrichtung und einem damit gekoppelten LOHC-Reaktor,
- Fig. 2: eine detaillierte schematische Darstellung der Synthese-Einrichtung gemäß Fig. 1.

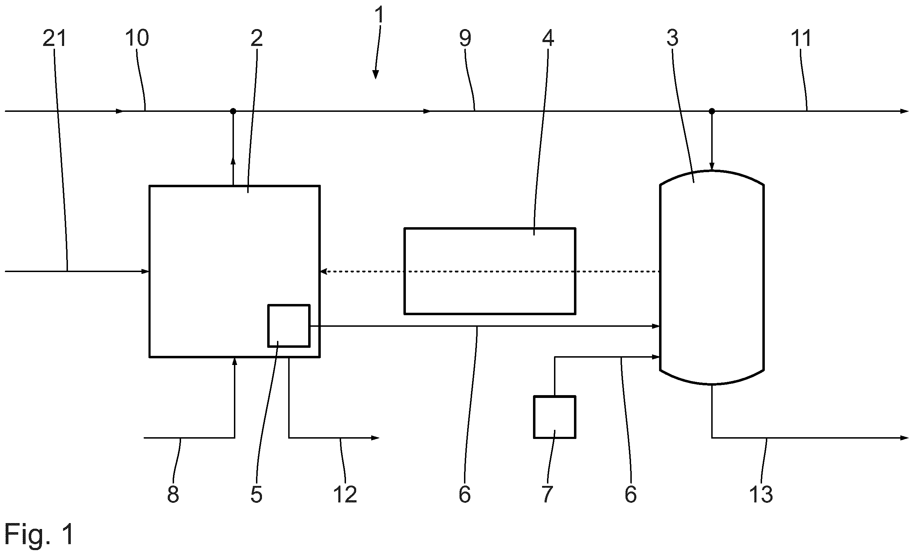

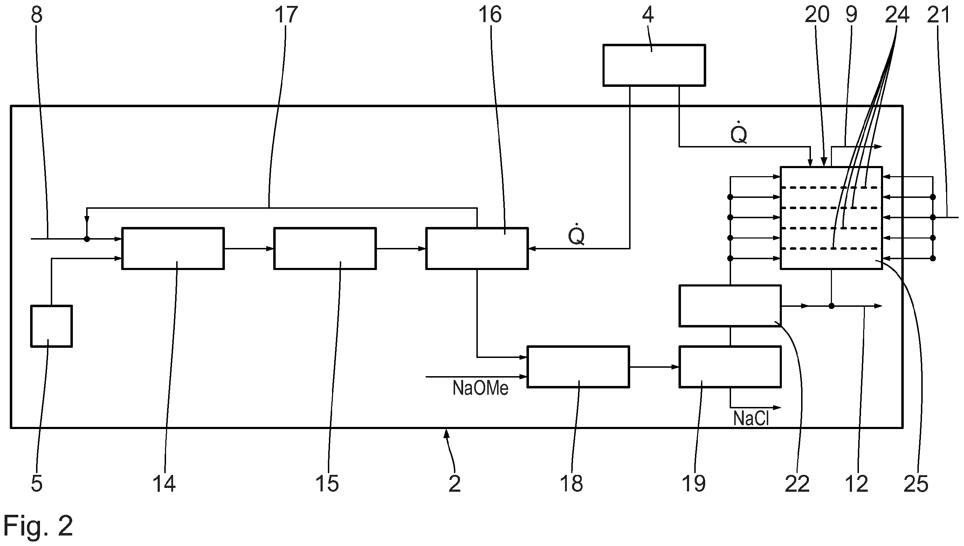

Eine in Fig. 1 und 2 als Ganzes mit 1 gekennzeichnete Anlage dient zur Herstellung von Benzyltoluol BT und dessen Verwendung als Wasserstoffträgermedium. Die Anlage 1 umfasst eine als Synthese-Einrichtung 2 ausgeführte Herstell-Einrichtung, die zur Herstellung von BT dient. In Abhängigkeit des Herstellungsprozesses für BT können auch andere Einrichtungen verwendet werden, um BT herzustellen.

Die Anlage 1 weist ferner einen LOHC-Reaktor 3 auf, der zur Verwendung von BT und/oder PBT als Wasserstoffträgermedium dient. Der LOHC-Reaktor 3 ist insbesondere ein Hydrierreaktor, in dem BT in einer katalytischen Hydrierreaktion zu PBT hydriert wird. Alternativ kann der LOHC-Reaktor 3 auch als Oxidationsreaktor ausgeführt sein.

Der Hydrierreaktor 3 ist mit der Synthese-Einrichtung 2 mittels eines Wärmeübertragers 4 in wärmeübertragender Weise verbunden. Insbesondere ist der Hydrierreaktor 3 mit der Synthese-Einrichtung 2 unmittelbar gekoppelt. Mit dem Wärmeübertrager 4 kann Wärme, die dem Hydrierreaktor 3 anfällt an die Synthese-Einrichtung 2 abgegeben und übertragen werden.

Die Synthese-Einrichtung 2 weist eine integrierte Elektrolysevorrichtung 5 auf. In der Elektrolysevorrichtung 5 wird Chlor hergestellt, das für die Verwendung in der Synthese-Einrichtung 2 zur Herstellung von BT erforderlich ist. Die Elektrolysevorrichtung 5 ist mittels einer Wasserstoffleitung 6 fluidtechnisch mit dem Hydrierreaktor 3 verbunden. Zusätzlich oder alternativ ist eine Wasserstoffquelle 7 vorhanden, die mittels einer weiteren Wasserstoffleitung 6 an den Reaktor 3 angeschlossen ist. Die Wasserstoffquelle 7 kann ein Wasserstoffspeicherbehälter und/oder eine Schnittstelle für eine Wasserstoff-Versorgungsleitung sein. Die Wasserstoffquelle 7 kann auch als Elektrolyseur ausgeführt sein, der mittels, insbesondere regenerativ erzeugtem, Strom für die Wasserelektrolyse und damit zur Wasserstofferzeugung verwendet wird. Die Elektrolysevorrichtung 5 kann auch der Synthese-Einrichtung 2 vorgelagert angeordnet sein.

In die Synthese-Einrichtung 2 mündet eine Rohstoffleitung 8, mittels der die für die BT-Herstellung erforderlichen Rohstoffe zugeführt werden können. Die Rohstoffe werden entweder in Speicherbehältern zur Verfügung gestellt oder an der Anlage 1 hergestellt und in die Rohstoffleitung 8 eingespeist.

Aus der Synthese-Einrichtung 2 führt eine BT-Verbindungsleitung 9, die in den Hydrierreaktor 3 mündet. In die BT-Verbindungsleitung 9 mündet eine BT-Zuführleitung 10, mittels der zusätzliches BT, beispielsweise aus einem nicht dargestellten Speicherbehälter, in die BT-Verbindungsleitung 9 und damit in den Reaktor 3 zugeführt werden kann. Insbesondere ist es möglich, die Stoffströme durch die Leitungen 9, 10 anteilig zu mischen. Das Mischungsverhältnis der durch die jeweiligen Leitungen 9, 10 geführten Stoffströme kann insbesondere veränderlich eingestellt und insbesondere geregelt werden. Die Regelung kann insbesondere in Abhängigkeit der Energiemenge erfolgen, die von dem Hydrierreaktor 3 auf die Synthese-Einrichtung 2 übertragen wird. Wenn beispielsweise mit dem Hydrierreaktor 3 vergleichsweise wenig Abwärme produziert wird, kann die Leistung der Synthese-Einrichtung 2 reduziert und insbesondere gestoppt werden. In diesem Fall kann der über die BT-Zuführleitung 10 dem Hydrierreaktor 3 zugeführte BT-Mengenanteil erhöht werden. An die BT-Verbindungsleitung 9 ist eine BT-Abführleitung 11 angeschlossen, mittels der überschüssiges BT, das insbesondere in der Synthese-Einrichtung 2 hergestellt worden ist, abgeführt werden kann. Die BT-Abführleitung 11 kann in einem nicht dargestellten Speicherbehälter münden und/oder als Rückführleitung in die BT-Zuführleitung und/oder BT-Verbindungsleitung geführt werden.

Aus der Synthese-Einrichtung 2 führt außerdem eine Syntheseproduktleitung 12, mit der Syntheseprodukte abgeführt werden.

Aus dem Reaktor 3 mündet eine PBT-Abführleitung 13, mit der das hydrierte Produkt, also PBT in einem nicht dargestellten Speicherbehälter zwischengespeichert oder mittels Transportfahrzeugen zu einem Ort transportiert werden kann, an dem das hydrierte Produkt nachgefragt ist. Dieser Ort kann energiearm sein, insbesondere bezogen auf regenerative Energiequellen. An diesem Ort wird das hydrierte Produkt, insbesondere dehydriert und der freigesetzte Wasserstoff verstromt und/oder stofflich genutzt. Alternativ kann das hydrierte Produkt, also PBT, in einer Direkt-Brennstoffzelle direkt, also ohne vorherige Dehydrierung, verstromt werden.

Nachfolgend wird anhand von Fig. 2 die Synthese-Einrichtung 2 näher erläutert.

Die Synthese-Einrichtung 2 weist einen ersten Reaktor 14 auf, in den die Rohstoffleitung 8 mündet. Außerdem ist an den ersten Reaktor 14 die Elektrolysevorrichtung 5 angeschlossen. Über die Rohstoffleitung 8 wird Toluol in den ersten Reaktor 14 zugeführt. Der erste Reaktor 14 ist beispielsweise ein fotochemischer Reaktor.

Stromabwärts des ersten Reaktors 14 ist ein zweiter Reaktor 15 angeordnet und mit dem ersten Reaktor 14 verbunden. In dem zweiten Reaktor 15 findet eine Friedel-Crafts-Alkylierung statt.

Stromabwärts des zweiten Reaktors 15 ist eine erste Trennvorrichtung 16 angeordnet und mit dem zweiten Reaktor 15 verbunden. Die erste Trennvorrichtung 16 ist als Vakuumkolonne ausgeführt. In der ersten Trennvorrichtung 16 wird Toluol, das in dem zweiten Reaktor 15 nicht umgesetzt worden ist, als Toluol-Überschuss mittels einer Rückführleitung 17 in die Rohstoffleitung 8 rückgeführt.

Für den Betrieb der ersten Trennvorrichtung 16 ist Wärme erforderlich, was in Fig. 2 durch eine der ersten Trennvorrichtung 16 zugeführten Wärmestrom Q symbolisiert ist. Der Wärmestrom Q wird der ersten Trennvorrichtung 16 von dem Wärmeübertrager 4, der außerhalb der Synthese-Einrichtung 2 angeordnet ist, zur Verfügung gestellt.

An die Filtereinheit 19 ist eine Vorreinigungseinheit 22 angeschlossen, die mit der Syntheseproduktleitung 12 verbunden ist. Die Vorreinigungseinheit 22 ist mittels eines Leitungssystems 23 an eine zweite Trennvorrichtung 20 angeschlossen. Die zweite Trennvorrichtung 20 ist als Vakuumkolonne ausgeführt mit mehreren, insbesondere vertikal übereinander angeordneten, Kolonnenböden 24. In einem vertikal unten angeordneten Bodenbereich der zweiten Trennvorrichtung 20 ist ein Sumpf 25 angeordnet. Die zweite Trennvorrichtung 20 ist, insbesondere im Bereich des Sumpfes 25 an die Syntheseproduktleitung 12 angeschlossen. An die zweite Trennvorrichtung 20 ist außerdem die BT-Verbindungsleitung 9 angeschlossen.

Bereits prozessiertes BT kann über eine separate Einspeiseleitung 21 der Synthese-Einrichtung 2 und insbesondere der zweiten Trennvorrichtung 20 direkt zugeführt werden.

Nachfolgend wird ein Verfahren zur Herstellung von BT und dessen Verwendung als Wasserstoffträgermedium näher erläutert.

In dem fotochemischen Reaktor 14 wird Toluol zu Benzylchlorid chloriert. Das dafür erforderliche Chlor wird zuvor in der Elektrolysevorrichtung 5 mittels endothermer Chloralkalilektrolyse nach folgender Reaktionsgleichung gewonnen:

2H₂O + 2NaCl → H₂ + Cl₂ + 2Na⁺ + 2OH⁻

Der bei der Chloralkalilektrolyse freiwerdende Wasserstoff H₂ wird mittels der Wasserstoffleitung 6 dem LOHC-Reaktor 3 zugeführt, so dass der Gesamtwasserstoffbedarf für die LOHC-Anwendung reduziert ist. Zur Herstellung von 1kg BT (5,5 mol) werden unter idealen Bedingungen 5,5 mol Benzylchlorid benötigt. Dieses Benzylchlorid könnte unter idealen Bedingungen aus 5,5 mol Toluol und 11 mol Chlor (5,5 mol Cl₂) hergestellt werden. Es werden entsprechend 194 g Cl₂ pro kg BT benötigt oder stehen entsprechend 5,5 g H₂ pro kg BT zur Verfügung, was etwas weniger als 10% der Speicherkapazität von BT entspricht.

Das Benzylchlorid reagiert in dem zweiten Reaktor 15 mit überstöchiometrisch dosiertem Toluol in einer Friedel-Crafts-Alkylierung zu Benzyltoluol. Der Toluolüberschuss dient einer Erhöhung der Reaktionsselektivität durch die Vermeidung der Mehrfachalkylierung. Das nicht umgesetzte Toluol wird durch Vakuumdestillation als Kopfprodukt in der ersten Trennvorrichtung 16 abgetrennt und über die Rückführleitung 17 für die Synthese zurückgeführt.

Das im zweiten Reaktor 15 gebildete Benzyltoluol, das in der ersten Trennvorrichtung 16 vom Toluol abgetrennt worden ist, wird einem dritten Reaktor 18 zugeführt, der mit der ersten Trennvorrichtung 16 verbunden ist.

In dem dritten Reaktor 18 wird dem Benzyltoluol Natriummethanolat (NaOMe) zudosiert, um restchlorierte Spezies zu defunktionalisieren, so dass Natriumchlorid gebildet wird. Das in den organischen Lösungsmitteln unlösliche Natriumchlorid wird in einer dem dritten Reaktor 18 nachgelagerten Filtereinheit 19 durch Filtration abgetrennt.

Eine Mischung, die vorwiegend BT und DBT aufweist, wird aus der Filtereinheit 19 zunächst der Vorreinigungseinheit 22 zugeführt. In der Vorreinigungseinheit 22 findet eine vorgelagerte Separation statt, um eine unscharfe Abtrennung des BT von DBT und anderen Schwersiedern zu ermöglichen. Diese Separation ermöglicht eine vergleichsweise hohe Reinheit bei einer vergleichsweise niedrigen Ausbeute. Die abgetrennten Bestandteile, also DBT und andere Schwersieder, werden an die Syntheseproduktleitung 12 abgegeben.

Eine Mischung, die vorwiegend BT und zu geringeren Anteilen noch DBT und andere Schwersieder aufweisen kann, wird mittels des Leitungssystems 23 der zweiten Trennvorrichtung 20 zugeführt, dort destillativ aufgereinigt und reines BT entsprechend vorgeschriebenen Produktspezifikationen mittels der BT-Verbindungsleitung 9 in dem LOHC-Reaktor 3 geleitet. Mittels des Leitungssystems 23 kann die Mischung aus der Vorreinigungseinheit 22 gezielt einen der Kolonnenböden 24 zugeführt werden. Die Aufreinigungsschritte in der ersten Trennvorrichtung 16 und/oder der zweiten Trennvorrichtung 20 sind insbesondere thermische Trenntechniken, insbesondere Vakuumdestillation, die besonders energieintensiv sind. Die hierfür notwendige Energie, insbesondere in Form von Wärme, wird mittels des Wärmeübertragers 4 bereitgestellt, der die Wärme des LOHC-Reaktors 3 unmittelbar überträgt.

Die in der Synthese-Einrichtung 2 verwendete Anlagentechnik, insbesondere die erste Trennvorrichtung 16 und die zweite Trennvorrichtung 20 können vorteilhaft genutzt werden, um das in einer LOHC-Kreislaufwirtschaft bereits prozessierte BT aufzureinigen. Der Anteil des gebrauchten BT, der in der zweiten Trennvorrichtung 20 aufgereinigt wird, beträgt mindestens 50% bezogen auf Strom des gebrauchten BT. Dieses bereits genutzte BT kann über die separate Einspeiseleitung 21 der Synthese-Einrichtung 2 zugeführt werden. Die Einspeiseleitung 21 kann insbesondere analog zu den Leitungssystem 23 ausgeführt sein mit mehreren Leitungsanschlüssen, die eine gezielte Zuführung des prozessierten BT zu den verschiedenen Kolonnenböden 24 der zweiten Trennvorrichtung 20 ermöglicht. Zusätzlich oder alternativ kann bereits benutztes BT auch über die BT-Zuführleitung 10 oder über eine an die PBT-Abführleitung 13 angeschlossene, nicht dargestellte Rückführleitung, in die Synthese-Einrichtung 2 zugeführt werden. Bereits verwendetes BT oder PBT weist insbesondere Verunreinigungen und/oder Nebenprodukte auf, die in der ersten Trennvorrichtung 16 und/oder der zweiten Trennvorrichtung 20 abgeschieden werden können.

Besonders vorteilhaft ist es, wenn das bereits gebrauchte BT den entsprechend seiner Fraktion passenden Kolonnenboden 24 durch einen entsprechenden Steuer-/Regelungseinheit zuzuführen, indem beispielsweise der Hydriergrad des gebrauchten BT und/oder dessen Nebenproduktgehalts gemessen wird. Es ist auch möglich, das BT vorzufraktionieren, beispielsweise auf Basis der Dichte, insbesondere mittels einer Zentrifuge, und/oder als Basis der Molekulargröße, insbesondere mittels einer Membran als Molekularsieb. Dadurch ist eine effizientere Verteilung der Fraktionen auf die verschiedenen Kolonnenböden möglich. Es ist auch denkbar, das Trennverfahren derart durchzuführen, dass schwersiedende Verbindungen mit vergleichsweise hoher Reinheit abgetrennt werden, die insbesondere direkt mit einem Syntheseprodukt der Destillationskolonne vermischt werden können. Insbesondere ist es nicht erforderlich, die schwersiedenden Verbindungen der Kolonne zurückzuführen, also eine Bypass-Leitung für die schwersiedenden Verbindungen bereitzustellen. Dadurch sind Energieeinsparungen bei der Destillationskolonne möglich. Als Verunreinigung und/oder Nebenprodukt sind insbesondere auch nicht hydrierte, teilhydrierte oder vollständig hydrierte BT-Spezies anzusehen.

Beispielsweise wird in einem Dehydrierreaktor PBT zu 80% dehydriert, so dass im gebildeten BT noch mindestens 20%-w/w vollständig hydrierte (H12)-Spezies oder mehr als 20% teilhydrierte (H6)-Spezies oder entsprechende Mischungen enthalten sind. Dieser Anteil ist entsprechend als Verunreinigung von BT zu interpretieren. Ebenso gilt dies umgekehrt für PBT. Wenn beispielsweise in dem Hydrierreaktor 3 nur zu 90% das BT hydriert worden ist, dann sind im PBT noch mindestens 10%-w/w vollständig dehydrierte (H0)-Spezies oder mehr als 10% teilweise dehydrierte (H6)-Spezies oder entsprechende Mischungen enthalten. Der Anteil dieser Differenz zum vollständigen BT-Hydriergrad, der aus BT besteht, kann entsprechend ebenfalls als Verunreinigung bewertet werden, da in diesen Fällen die Qualität in Form eines maximalen Wasserstoffspeichers- oder Wasserstofffreisetzungsvermögens herabsetzt.

Die bei den Trennvorrichtungen 16, 20 anfallenden Fraktionen, insbesondere auf der Aufreinigung des gebrauchten BTs und aus der BT-Synthese, können anschließend unterschiedlichen Zwecken und Verwendungen zugeführt werden. Ein Zuführen von BT-Fraktionen gemäß H0, H6 und/oder H12 zu einer entsprechenden Hydrier- oder Dehydrierverwendung ist vorteilhaft. Andere Fraktionen, insbesondere H2, H4, H8 oder H10 sind denkbar, aber praktisch kaum relevant. Die H6-Fraktion von BT ist sowohl für einen Hydrier- als auch einen Dehydriervorgang verwendbar, so dass die Verwendung typischerweise in Abhängigkeit der Nähe zu dem nächsten Reaktor entschieden werden kann.

Es wurde insbesondere gefunden, dass die Trennvorrichtungen 16, 20 eine Hydrierung bei Niederdruck von höchstens 15 barg, insbesondere von höchstens 10 barg und insbesondere von höchstens 5 barg begünstigen.

Eine Niederdruck-Hydrierung von Toluol kann bei höchstens 10 barg, insbesondere höchstens 5 barg und insbesondere höchstens 3 barg erfolgen.

Bei der Niederdruck-Hydrierung findet eine vergleichsweise unvollständige Hydrierung statt. Der Hydriergrad des hydrierten LOHC beträgt insbesondere höchstens 95%, insbesondere höchstens 92%, insbesondere höchstens 90%, insbesondere höchstens 85%. Der Anteil des nicht hydrierten LOHC, insbesondere des unhydrierten BT, stellt eine Verunreinigung dar und kann unmittelbar über eine Rückführleitung aus der Trennvorrichtung 16, 20 an den LOHC-Reaktor 3 geleitet werden. Zusätzlich ist in diesem Fall an den Trennvorrichtungen 16, 20 jeweils eine separate Abführleitung angeschlossen, mit der hydrierte LOHC, insbesondere reine BT-H, also PBT, abgeführt wird. Die Niederdruck-Hydrierung ist vorteilhaft, weil der Betrieb des Niederdruck-Hydrierreaktors mit reduzierten Kompressionskosten erfolgen kann. Der Energiebedarf für die Durchführung der Kompression bei der Niederdruck-Hydrierung ist reduziert. Zudem wurde erkannt, dass die Menge des Katalysatormaterials, insbesondere trotz des Niederdrucks und einer möglicherweise damit einhergehenden reduzierten Reaktionskinetik, konstant gehalten werden kann. Es ist möglich, dass die Menge des Katalysatormaterials reduziert werden kann, wenn der Hydriergrad abgesenkt wird.

Weitere anfallende Fraktionen wie beispielsweise DBT und/oder Methylfluoren können abgesondert und für entsprechende Zwecke im Sinne einer Abgabe als Produkt weiter verwendet werden, wie beispielsweise DBT als Thermalöl. Diese Fraktionen können auch der thermischen Verwertung zur Wärmeerzeugung oder einer sogenannten Cracking-Einrichtung zugeführt werden. Ein solches Cracken der Nebenprodukte und/oder Verunreinigungen könnte eine Rückführung der gecrackten Produkte in die BT-Synthese ermöglichen.

Die in der ersten Trennvorrichtung 16, die als Vakuumkolonne ausgeführt ist, herrschenden Sumpftemperaturen liegen in einem Bereich zwischen 60°C und 150°C, insbesondere zwischen 80°C und 120°C und insbesondere zwischen 90°C und 110°C. Der Reboiler der ersten Trennvorrichtung 16 kann mit Niederdruck-Dampf in einem Druckbereich von 1bar bis 4bar betrieben werden, der anhand der Reaktionsexothermie in dem Reaktor 3 erzeugt werden kann. Die Sumpftemperaturen der zweiten Trennvorrichtung, die als Vakuumkolonne ausgeführt ist, liegen in einem Bereich zwischen 220°C und 300°C, insbesondere zwischen 240°C und 280°C und insbesondere zwischen 250°C und 270°C. Der Reboiler dieser Vakuumkolonne kann mit Mitteldruck-Dampf im Bereich zwischen 45bar und 85bar betrieben werden, der durch einen LOHC-Hochtemperatur-hydrierer erzeugt werden kann. Der Hochtemperaturzustand bei der Hydrierung kann durch diverse Maßnahmen erreicht werden. Beispielsweise können dazu ein hoher Umlaufstrom, die Verdünnung des Katalysatorbetts entlang der Reaktionslänge und/oder die Einspeisung von kaltem Wasserstoff zum Quenchen der Reaktion entlang der Reaktionslänge dienen. Außerdem kann die Hydrierreaktion in mehreren Stufen mit unterschiedlichen Temperaturniveaus betrieben und so höhere Reaktionstemperaturen ausgekoppelt werden.

Alternativ zu einem zwischengeschalteten Dampfkreislauf mit Niederdruck- und Mitteldruck-Druckschienen könnte der BT-Produktionsstrom selbst als Wärmeträgerfluid dienen. In diesem Fall könnte der LOHC-Hochtemperaturhydrierer mantelseitig direkt mit dem BT-Produktionsstrom gekühlt werden. Der heiße BT-Produktionsstrom könnte danach sowohl die erste Trennvorrichtung 16 als auch die zweite Trennvorrichtung 20 mit Wärme am Reboiler versorgen, bevor er dann in den Hydrierreaktor 3 hineinfließt.

Eine Berechnung der spezifischen Wärmebedarfes hat ergeben, dass dieser 0,40 MWh/tBT-V für die erste Trennvorrichtung 16 und 0,23 MWh/t BT-V für die zweite Trennvorrichtung 20 beträgt. Als BT-V wird eine Mischung verschiedener BT-Isomere bezeichnet. Die Annahme von 9 kWh/kgH₂ Wärmenutzung aus einer Hydrieranlage resultiert in einem spezifischen Wärmeexportpotential von 0,53 MWh/tBT-D. Als BT-D wird der entladene Zustand des BT bezeichnet, also insbesondere unhydriertes Benzyltoluol. Unter diesen Bedingungen ergibt sich ein Anlagengrößenverhältnis, also Synthese-Einrichtung 2 zu LOHC-Reaktor 3 von 1:1,2, damit der Wärmebedarf der Trennvorrichtungen 16, 20 völlig durch Reaktionsexothermie der Hydrierung gedeckt wird. Durch die verfahrenstechnische Optimierung der Kolonnenauslegung lässt sich der Wärmebedarf der Kolonne noch reduzieren, so dass ein Anlagengrößenverhältnis von 1:1 erreicht werden kann.

Für die stoffliche Integration des gebrauchten BT-Stroms aus dem LOHC-Prozess kann der BT-Strom teilweise oder vollständig in die zweite Trennvorrichtung 20 eingespeist werden. Dies geschieht insbesondere in Abhängigkeit einer vorgeschalteten Qualitätskontrolle, bei der ermittelt wird, ob die Reinheit des gebrauchten BT für einen robusten Prozessbetrieb ausreicht. Der Anteil des gebrauchten BT, der nicht in die Kolonne fließt, kann direkt dem Hydrierreaktor 3 zugeführt werden. Während des Betriebszeitraums der Anlage 1 kann die Synthese-Einrichtung 2 derart betrieben werden, dass der BT-Ausstoß veränderlich ist, insbesondere in Abhängigkeit des BT-Bedarfs im Hydrierreaktor 3. Der zweiten Trennvorrichtung 20 kann dementsprechend mehr oder weniger gebrauchtes BT zugeführt werden. Dies beeinflusst auch die Wärmebilanz der Synthese-Einrichtung 2. Um den Wärmedarf der zweiten Trennvorrichtung 20 zu reduzieren, könnte eine vorgeschaltete unschärfere Trennung der schwer siedenden Nebenproduktfraktion, insbesondere von DBT, z.B. anhand deren verschiedenere Molekulargrößen oder ein mittels eines adsorptiven Verfahrens stattfinden.

Die schwer siedende Nebenproduktfraktion aus der BT-Synthese besteht vorwiegend aus DBT und/oder mehrfach alkylierten Spezies. Die schwer siedende Nebenproduktfraktion aus dem LOHC-Kreislauf weist Fluoren, Anthracen und andere auf. Durch Einspeisung von gebrauchtem BT vermischen sich die beiden Nebenproduktfraktionen und werden als Sumpfprodukt aus der zweiten Trennvorrichtung 20 gewonnen. Um die Prozesszirkularität zu erhöhen und somit weniger Rohstoff fossilen Ursprungs auszuwenden, kann die Schwersiederfraktion einem Raffinerieprozess gemäß dem Fluid-Catalytic-Cracking oder dem Hydro-Cracking zugeführt werden, wo BTX-Vorstufen produziert werden, also Vorstufen von Benzol, Toluol und/oder Xylol. Alternativ kann die Sumpffraktion auch als Wärmeträgeröl Verwendung finden.

## Patentansprüche

1. Anlage zur Herstellung und Verwendung eines flüssigen organischen Wasserstoffträgermediums (LOHC) umfassend
a. eine Herstell-Einrichtung (2) zur Herstellung von LOHC,
b. einen mit der Herstell-Einrichtung (2) gekoppelten LOHC-Reaktor (3) zum Speichern und/oder Freisetzen von Wasserstoff mittels des LOHC.

2. Anlage gemäß Anspruch 1, **gekennzeichnet durch** einen Wärmeübertrager (4) zur Übertragung von Wärme von dem LOHC-Reaktor (3) an die Herstell-Einrichtung (2).

3. Anlage gemäß einem der vorstehenden Ansprüche, **dadurch gekennzeichnet, dass** der LOHC-Reaktor als Hydrierreaktor (3) ausgeführt ist.

4. Anlage gemäß einem der vorstehenden Ansprüche, **dadurch gekennzeichnet, dass** die Herstell-Einrichtung (2) eine Trennvorrichtung (16, 20), insbesondere eine Destillationskolonne umfasst, wobei die Trennvorrichtung (16, 20) insbesondere fluidtechnisch mit dem LOHC-Reaktor (3) verbunden ist.

5. Anlage gemäß einem der vorstehenden Ansprüche, **gekennzeichnet durch** eine Elektrolysevorrichtung (5) zur Bereitstellung von Chlor für die Herstell-Einrichtung (2), wobei die Elektrolysevorrichtung (5) insbesondere fluidtechnisch mit dem LOHC-Reaktor (3), insbesondere dem Hydrierreaktor, verbunden ist.

6. Verfahren zur Herstellung und Verwendung eines flüssigen organischen Wasserstoffträgermediums (LOHC) umfassend die Verfahrensschritte
- Herstellen von LOHC mittels einer Herstell-Einrichtung (2),
- Betreiben eines mit der Herstell-Einrichtung (2) gekoppelten LOHC-Reaktors (3) zum Speichern und/oder Freisetzen von Wasserstoff mittels des LOHC.

7. Verfahren gemäß Anspruch 6, **dadurch gekennzeichnet, dass** Abwärme des LOHC-Reaktors (3) an die Herstell-Einrichtung (2) mittels eines Wärmeübertragers (4) übertragen wird.

8. Verfahren gemäß Anspruch 6 oder 7, **dadurch gekennzeichnet, dass** das Herstellen von LOHC, insbesondere Benzyltoluol, ein Abtrennen des LOHC, insbesondere von Benzyltoluol, aus einem Stoffgemisch mittels einer Trennvorrichtung (16, 20) der Herstell-Einrichtung (2) umfasst.

9. Verfahren gemäß Anspruch 8, **dadurch gekennzeichnet, dass** der Trennvorrichtung (16, 20) ein in dem LOHC-Reaktor (3) erzeugter Stoffstrom zugeführt wird.

10. Verfahren gemäß Anspruch 9, **dadurch gekennzeichnet, dass** die Trennvorrichtung (16, 20) als Destillationskolonne mit mehreren Kolonnenböden ausgeführt ist, wobei der in dem LOHC-Reaktor (3) erzeugte Stoffstrom in Abhängigkeit seiner physikalischen und/oder chemischen Eigenschaften jeweils einem der mehreren Kolonnenböden zugeführt wird.

11. Verfahren gemäß Anspruch 10, **dadurch gekennzeichnet, dass** die gezielte Zuführung des Stoffstroms mittels einer Steuer-/Regelungseinheit automatisiert und insbesondere vollautomatisch erfolgt.
